(19)

Europäisches
Patentamt
European
Patent Office
Office européen
des brevets

(11) **EP 2 511 323 A1**

(12) **EUROPEAN PATENT APPLICATION**

(43) Date of publication:
**17.10.2012 Bulletin 2012/42**

(51) Int Cl.:
**C08J 5/00** (2006.01)

(21) Application number: **11162066.2**

(22) Date of filing: **12.04.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Södra Skogsägarna Ekonomiska
Förening
351 89 Växjö (SE)**

(72) Inventors:
• **Boldizar, Antal
511 42 Kinnahult (SE)**
• **Ariño, Ruth
416 57 Göteborg (SE)**

(74) Representative: **Valea AB
Box 7086
103 87 Stockholm (SE)**

(54) **Composite and a process for making such composite**

(57)     The present invention relates to composites comprising cellulosic fibers, optionally additives and a thermoplastic matrix, said matrix essentially contains ethylene acrylic acid copolymer. Further, the present invention also relates to a composite mixture comprising cellulosic fibers, a thermoplastic matrix and optionally additives, said matrix essentially contains ethylene acrylic acid copolymer and optionally additives. The present invention also relates to a method for manufacturing composites comprising a thermoplastic matrix and cellulosic fibers by using elongation dispersive mixing and to composites manufactured by said method.

**EP 2 511 323 A1**

**Description**

**Field of the invention**

The present invention relates to composites comprising cellulosic fibers, optionally additives and a thermoplastic matrix, said matrix essentially contains ethylene acrylic acid copolymer. Further, the present invention also relates to a composite mixture comprising cellulosic fibers, a thermoplastic matrix and optionally additives, said matrix essentially contains ethylene acrylic acid copolymer and optionally additives. The present invention also relates to a method for manufacturing composites comprising a thermoplastic matrix and cellulosic fibers by using elongation dispersive mixing and to composites manufactured by said method.

**Background**

Fiber-reinforced composites have become important as solutions in the search for alternative material to metals as they are strong and light weight and have good impact resistance and high load bearing ability. The fibers commonly used are synthetically made (e.g. glass and carbon).

In recent years, the interest of using natural fibers as reinforcement material in thermoplastic polymers has increased considerably. For example, both in the automotive and packaging industry the use of natural fibers as reinforcement material have increased. Also, other sectors of the industry, e.g. construction industry and computer industry are trying to replace synthetic fibers with natural fibers. The properties of natural fibers, which make them attractive to use as alternative reinforcement material are e.g. renewability, biodegradability, unlimited availability, low cost, low density and high specific stiffness. Other advantages of using natural fibers are their low abrasive nature and physiological harmlessness. However, there are problems associated with said replacement, such as the poorer mechanical performance of the natural fibers.

The thermoplastics commonly used for manufacturing natural fiber-reinforced composites are often polyethylene and polypropylene, but other thermoplastics have also been used. However, there are difficulties associated with the production of fiber reinforced polypropylene or polyethylene composites due to the non-polar surface of both the polymer and the fibers. This non-polarity will prevent chemical coupling, i.e. there will be poor adhesion between the fibers and thermoplastic matrix, and also reduce the mechanical mixing (poor dispersion of the fibers in the thermoplastic matrix) between the two materials. This, in turn, will influence the stiffness and strength of the product. One way to overcome this problem is to add an additional compound, which has the ability to change the polarity of the fiber, examples of such compounds are compatibilizers and coupling agents, which is shown in e.g. US 2003/0228454. The most common compatibilizers are silane, isocyanate and titanate based compounds. The problem of having thermoplastic matrix comprising these compounds is that it is difficult to control what will happen with said compounds during the manufacturing process, they might not be sufficiently dispersed in the thermoplastic matrix and therefore not in the composite too. Further, there is also problem to control what will happen with these compounds during the use of the composite, they might e.g. emit into the environment. Hence, there is a need for a natural fiber reinforced composite material which does not comprise any coupling agents or compatibilizers and thus is more environmentally friendly.

High temperatures are needed for processing both polyethylene and polypropylene. Natural fibers start to degrade at relatively low temperatures and these high processing temperatures will thus cause a degradation of the natural fibers. The degradation will have an impact on the properties of the manufactured product, such as its mechanical strength. Hence, there is a need for manufacturing processes which can be performed at lower process temperatures, i.e. at temperatures below 200°C.

Another difficulty associated with manufacturing natural fiber-reinforced composites is that said fibers have tendency to form bundles, i.e. non-dispersed fibre aggregates, thus decreasing the mechanical properties of the composite. These aggregates have to be reduced both in number and size. One way to overcome this problem is to process the composite material in extruders, hence using shearing forces in order to try to obtain good dispersion and also to reduce the amount of aggregates. Both J. Zhang et al. (J. Appl. Polymer Sci. 113, 2081-2089, (2009)) and J. Morán et al. (J. Appl. Polymer Sci. 103, 228-237 (2007)) and US 5709933 describe such methods. However, the shearing forces of the extruder are not strong enough to sufficiently break-up the fiber aggregates and there will not be a good dispersion of the fibers. Furthermore, a lot of the manufacturing methods use complicated process equipment in order try to obtain good dispersion, as can be seen in e.g. WO 99/56936. Hence, there exists a need for improved and simplified methods for obtaining good dispersion of the fibers and for breaking-up the fiber aggregates in thermoplastic matrixes to be used for manufacturing fiber-reinforced composites.

The present invention described below is intended to overcome the problems and difficulties mentioned above.

**Summary of the invention**

The present invention relates to fiber-reinforced composite comprising cellulosic fibers, a thermoplastic matrix and optionally additives, wherein said thermoplastic matrix essentially contains ethylene acrylic acid copolymer. The present invention also relates to a composite mixture comprising cellulosic fibers, a thermoplastic matrix and optionally additives, wherein said thermoplastic matrix essentially contains ethylene acrylic acid copolymer (EAA).

The present invention also relates to a method for producing fiber-reinforced composite by using elongation dispersive mixing. The method results in composites having very good tensile mechanical properties as said method provides for good dispersion of the fibers in the thermoplastic matrix by using high pressure, which will considerably reduce the fiber aggregates.

Hence, the present invention discloses composites having a considerably reduced number of fiber aggregates and improved tensile mechanical properties as compared to prior art composites.

The present invention also relate to the use of the composites according to the present invention in different applications

**Figures**

Figure 1    Microscope pictures of the middle part of different injection-molded samples
Figure 2    Injection molded sample from 30(70) IM, 30(70) 85 rpm, 30(70) 1 pass and 30(70) 2 passes

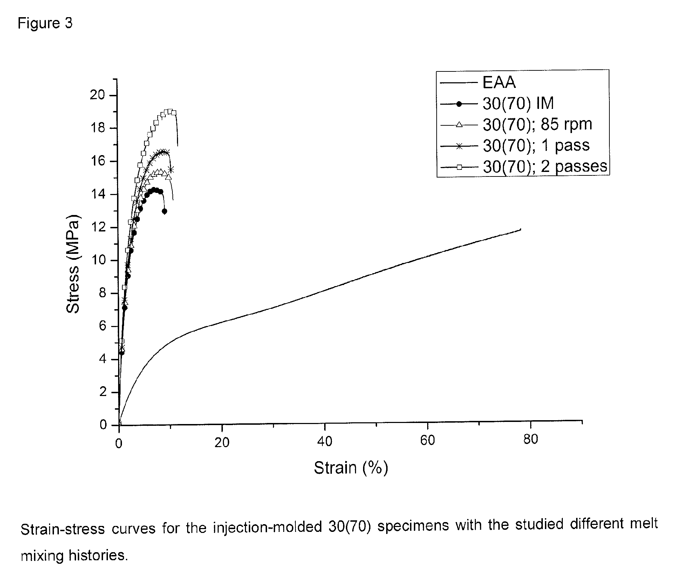

Figure 3    Strain-stress curves for the injection-molded 30(70) specimens with the studied different melt mixing histories

**Detailed description of the invention**

The present invention relates to fiber-reinforced composite comprising cellulosic fibers, a thermoplastic matrix and optionally additives, wherein said thermoplastic matrix essentially contains ethylene acrylic acid copolymer (EAA). According to one embodiment of the present invention said thermoplastic matrix only contains EAA. According to another embodiment, said composite consists of cellulosic fibers, a thermoplastic matrix essentially containing ethylene acrylic acid copolymer and no or at least one additive. It has surprisingly been found that EAA will have such high adhesion to the cellulosic fibers that no compatibilizer or coupling agent has to be added to the thermoplastic mixture in order to promote the compatibility between EAA and the cellulosic fibers. This is an advantage as this will simplify the manufacturing process of the composite and also provide a more homogenized thermoplastic mixture, said mixture and also said composite being more environmentally friendly. Furthermore, as EAA have a low melting temperature, the process temperature for the manufacturing of composites of the present invention can be lowered, which will reduce the risk of degradation of cellulosic fibers. Hence, the composites of the present invention will have very good mechanical performance.

Ethylene-acrylic acid copolymer (EAA) consists of a carbon backbone with occasional pendant carboxyl groups. EAA is used as compatibilizer, binder in non-woven fabrics, coating and interfacial agent. EAA has never been used as the major or only component of a thermoplastic matrix in a fiber-reinforced composite.

According to one embodiment of the present invention, said composite contains cellulosic fibers in the range of 10 to 40 weight% (wt%). According to another embodiment of the present invention, said range is of 20 to 40 wt%. According to another embodiment of the present invention, said range is of 25 to 35 wt%. According to another embodiment, said range is of 28 to 30 wt%. According to another embodiment of the present invention, the composite contains about 25, 26, 27, 28, 29, 30, 31, 32, 33, 34 or 35 wt% cellulosic fibers.

According to one embodiment of the present invention, the length of the cellulosic fibers used in said composite is in the range of 0.1 to 6.0 mm. However, other suitable lengths of the cellulosic fibers are in the range of 0.1 to 1.5 mm, 0.3 to 3.0 mm, and 2.0 to 5.0 mm. The length of the cellulosic fibers depends on which type of cellulosic fiber being used.

According to one embodiment of the present invention, the ethylene acrylic acid copolymer comprises acrylic acid in the range of 3 to 10 weight% (wt%). According to another embodiment of the present invention, the ethylene acrylic acid copolymer comprises 7 wt% acrylic acid. According to another embodiment of the present invention, the ethylene acrylic acid copolymer comprises 3 wt% acrylic acid. According to another embodiment of the present invention, the EAA may comprise up to 20 wt%. According to other embodiments of the present invention, the EAA may comprise 3, 4, 5, 6 or 7 wt% acrylic acid. It should be noted that these values are not exact meaning that they can vary slightly around the values provided.

One embodiment of the present invention relates to a composite consisting of about 30 wt% cellulosic fibers and a thermoplastic matrix containing ethylene acrylic acid copolymer only, which EAA comprises 3 or 7 wt% acrylic acid and no or at least one additive.

One embodiment of the present invention relates to a composite consisting of about 30 wt% cellulosic fibers and a thermoplastic matrix essentially containing ethylene acrylic acid copolymer, which EAA comprises 3 or 7 wt% acrylic acid and no or at least one additive.

The present invention also relates to a composite mixture comprising cellulosic fibers, a thermoplastic matrix and optionally additives, wherein said thermoplastic matrix essentially contains ethylene acrylic acid copolymer (EAA). According to one embodiment of the present invention said thermoplastic matrix only contains EAA. According to another embodiment, said composite mixture consists of cellulosic fibers, a thermoplastic matrix essentially containing ethylene acrylic acid copolymer and no or at least one additive. According to one embodiment of the present invention, said mixture contains cellulosic fibers in the range of 10 to 40 weight% (wt%). According to another embodiment of the present invention, said range is of 20 to 40 wt%. According to another embodiment of the present invention, said range is of 25 to 35 wt%. According to another embodiment, said range of is 28 to 30 wt%. According to another embodiment of the present invention, the composite contains about 25, 26, 27, 28, 29, 30, 31, 32, 33, 34 or 35 wt% cellulosic fibers.

According to one embodiment of the composite mixture of the present invention, the length of the cellulosic fibers used in the composite mixture is in the range of 0.1 to 6.0 mm. However, other suitable lengths of the cellulose fibers are in the range of 0.1 to 1.5 mm, 0.3 to 3.0 mm, and 2.0 to 5.0 mm. The length of the cellulosic fibers depends on which type of cellulosic fiber being used.

According to one embodiment of the composite mixture of the present invention, the ethylene acrylic acid copolymer used in the mixture comprises acrylic acid in the range of 3 to 10 weight%. According to another embodiment of the present invention, the ethylene acrylic acid copolymer comprises 7 wt% acrylic acid. According to another embodiment of the present invention, the ethylene acrylic acid copolymer comprises 3 wt% acrylic acid. According to another embodiment of the present invention, the EAA may comprise up to 20 wt%. According to other embodiments of the present invention, the EAA may comprise 4, 5 or 6 wt% acrylic acid. It should be noted that these values are not exact meaning that they can vary slightly around the values provided.

The present invention also relates to the use of the composite mixture of the present invention for manufacturing a cellulosic fiber-reinforced composite.

The present invention also relates to a method for manufacturing a fiber-reinforced composite mixture comprising 10 to 40 wt% cellulosic fibers, a thermoplastic matrix and optionally additives characterized in that said method comprises the following steps:

> a. preparing a mixture comprising cellulosic fibers in the range of 10 to 70 weight%, optionally additives and a thermoplastic matrix;
> b. passing the mixture obtained in a) through a device that will provide an elongational flow of said mixture by using high pressure, said flow will break-up the cellulosic fiber aggregates and orientate the cellulosic fibers in the flow direction.

The present invention also relates to a method for manufacturing a fiber-reinforced composite comprising 10 to 40 wt% cellulosic fibers, a thermoplastic matrix and optionally additives characterized in that said method comprises the following steps:

> a. preparing a mixture comprising cellulosic fibers in the range of 10 to 70 weight%, optionally additives and a thermoplastic matrix;
> b. passing the mixture obtained in a) through a device that will provide an elongational flow of said mixture by using high pressure, said flow will break-up the cellulosic fiber aggregates and orientate the cellulosic fibers in the flow direction;
> c. using the mixture obtained in step b) in an injection molding machine or extruder whereby a fiber-reinforced composite is obtained.

The methods of the present invention have the advantage that they will to the most extent considerably reduce the cellulosic fiber aggregates present in said mixture due the elongation dispersive mixing step (step b)). This step will, due to the elongational forces formed, break-up the fiber aggregates and also orient the fibers in the flow direction, i.e. there will be more useful cellulosic fibers within the thermoplastic matrix. This break-up will also provide better dispersion of the fibers and a more effective fiber-thermoplastic matrix interaction. In step b) the mixture is ejected from the device at high pressure. The elongational forces will provide for a homogeneous elongational flow. The velocity gradient is produced by reducing the cross section area in the flow direction. Hence, the method of the present invention will have, due to the elongation dispersive mixing, a very good influence on the mechanical performance of the obtained composite and the said composite will have a high tensile modulus and tensile strength.

According to one embodiment of the present invention, said mixture is melted in step a) and said melting is performed by melt mixing.

One embodiment of the present invention discloses that the methods for manufacturing a composite or a composite mixture according to the present invention comprises an additional manufacturing step. The step is called b1) wherein b1) is repeating step b) at least once. Hence, the mixture of step c) is the mixture obtained from b1). b1) is, as already mentioned, that the step b) is repeated at least once, which means that the mixture is exposed to additional elongation dispersive mixing. The obtained mixtures will have considerably reduced amount of aggregates and a good dispersion and orientation of the fibers. It is to be understood that the mixture in step b) and b1) is in a molten state when passing through the device.

According to one embodiment of the method for manufacturing a composite or a composite mixture according to the present invention, additional thermoplastic matrix is added to the mixture before or in step b).

According to one embodiment of the method for manufacturing a composite according to the present invention, additional thermoplastic matrix is added to the mixture before or in step c). Said thermoplastic matrix may e.g. essentially contain EAA or only contain EAA. The addition of additional thermoplastic will facilitate the adjustment of cellulosic fiber content.

According to one embodiment of the method for manufacturing a composite according to the present invention, the mixture is pelletized before step c). The mixture does not have to be pelletized but can be used in step c) directly as a molten mixture.

According to one embodiment of the method for manufacturing a composite or a composite mixture according to the present invention, the mixture obtained from step a) is pelletized before step b) and then melted in step b) before said mixture is passed through said device. According to one embodiment of the method for manufacturing a composite or a composite mixture according to the present invention, any thermoplastic polymer or combinations thereof can be used as a thermoplastic matrix, such as polyolefins or modified polyolefins. One embodiment of the present invention relates to methods wherein the thermoplastic matrix is selected from polyethylene, polypropylene and copolymers thereof. According to one embodiment of the present invention, said thermoplastic matrix is essentially containing polyethylene acrylic acid copolymer. Said ethylene acrylic acid copolymer comprises acrylic acid in the range of 3 to 20 weight%, such as 3 to 10 wt%, such as 3, 4, 5, 6 7, 8, 9, 10 or 20 wt%. It should be noted that these values are not exact meaning that they can vary slightly around the values provided.

According to one embodiment of the method for manufacturing a composite according to the present invention, the range of cellulosic fiber of the mixture obtained after step c) is of 20 to 40 wt%. According to another embodiment, said range is of 25 to 35 wt%. According to another embodiment, said range of is 28 to 30 wt%. According to another embodiment, the composite contains 25, 26, 27, 28, 29, 30, 31, 32, 33, 34 or 35 wt% cellulosic fibers.

The present invention also relates to the use of the method of the present invention for manufacturing a composite of the present invention.

According to the present invention a device used for providing the elongation dispersive mixing may be a converging die. The converging die will elongate the mixture and align the fibers and the polymers parallel to the flow direction. The converging die is used at a high pressure as higher pressure facilitates higher ejection rate and thus increases the stresses for breaking-up the aggregates.

According to the present invention the elongation dispersive mixing (step b) is performed at a pressure of at least 100 bar, such as 1000 bar, such as 1250 bar. The temperature used in the methods of the present invention depends on the temperature needed for melting the thermoplastic. One process equipment that may be used for performing the methods of the present invention are an injection molding machine. The composites produced by the methods of the present invention will have excellent stiffness and strength.

The cellulose fibers are in a form (e.g. disentangled, defibrated) that will make them possible to feed into device, such as an agglomerator, which will provide the mixing, such as melt mixing, of the thermoplastic matrix and cellulosic fibers. Such fibers may be obtained by e.g. grinding commercial cellulose sheets. Said fibers and the thermoplastic matrix, in the form of e.g. pellets are fed into said device. If said device is e.g. an agglomerator, agglomerates will be obtained.

The present invention also relates to the use of the method for manufacturing a composite or a composite mixture of the present invention for manufacturing a composite according to the present invention.

The composites of the present invention can be used as e.g. interior panel construction, household appliances, automotive parts, boat hulls and packages, such as for the food. Also, the composites of the present invention can be used in electric and electronic products. However, the skilled person could come up with other uses.

Hence, the composites obtained by the methods of the present invention will have excellent mechanical properties, such as stiffness and tensile strength. Thus, elongation dispersive mixing is very effective in breaking up the fiber aggregates and thus dispersing and orienting the fibers. By breaking up the aggregates, the surface contact area of the fibers will increase so the fibers are more effectively used as reinforcement with the consequent improvement of the mechanical properties.

*Definitions*

In the present context, the terms "thermoplastic matrix essentially contains" and "thermoplastic matrix essentially containing" mean that the thermoplastic matrix contains at least 70 wt% EAA, such as at least 80 wt% EAA, ,such as at least 90 wt% EAA.

In the present context, the term "agglomerates" is intended to mean pellets formed by the more or less tightly joining of cellulosic fibers and polymer.

In the present invention the term "aggregates" is intended to mean clusters of more or less joined cellulosic fibers.

The term "cellulosic fibers" in the present context relates to fibers from wood, woody plants and certain non-woody plants, cellulose-based recycled and regenerated fibers. Woody plants include for instance deciduous (hardwood) and coniferous (softwood) trees. Non-woody plants include for instance cotton, flax, esparto, grass, milkweed, straw, jute, hemp and bagasse. The term "cellulosic fibers" is intended to also include pulp fibers, such as kraft pulp fibers, dissolving pulp fibers, mechanical pulp fibers, sulphite pulp fibers and regenerated fibers. The term "regenerated fibers" is intended to include rayon, viscose, modal, lyocell, tencel, and cuprammonium rayon.

The term "elongation dispersive mixing" is intended to mean a mixing operation predominantly performed by elongational flow of melt mixture.

The term "elongational flow" is defined as a velocity gradient along the direction of flow. The velocity gradient is typically produced by reducing the cross section area in the flow direction.

The term "additive" is in the present context including both inorganic additives, which are selected from the group consisting of talc, calcium carbonate, calcium hydroxide, barium sulfate, mica, calcium silicate, clay, kaolin, silica, alumina, wollastonite, magnesium carbonate, magnesium hydroxide, titanium oxide, titanium dioxide zinc oxide, zinc sulfate, and combinations thereof, colorants, lubricants, process aids, heat stabilisers, light stabilisers, biocides and flame resistant agents.

The term "thermoplastic" is intended to include polymers that turn to a liquid when heated and freezes (solidifies) to a solid state when cooled sufficiently. Examples, but not limited thereto, of thermoplastics are polyethylene, polypropylene and copolymers therefore. Ethylene acrylic acid copolymer is another example.

In the present context the term "mixture" is intended to define a material system made up by two or more different substances which are mixed together but are not combined chemically.

The term "matrix" is intended to be defined in the present context is, unless stated otherwise, as the continuous material part surrounding the fibers.

**Experimental section**

The present invention is further illustrated and explained by the following non-limiting examples

*Introduction*

The melt processing and the tensile mechanical properties of composites consisting of 30 wt% cellulosic fibers and ethylene-acrylic acid copolymer (EAA) have been studied. The cellulosic fibers used were obtained from softwood kraft pulp and the EAA contained 7% acrylic acid.

Different processing techniques have been used in order to better understand how the mixing of the melted polymer mixtures will influence the dispersion of the cellulosic fibers. The mixtures were subjected to either extrusion mixing or elongation dispersive mixing and were then injection molded. The extrusion mixing was performed with a single screw extruder at different screw rotation speeds. The elongation dispersive mixing was performed by either using one melt ejection or two on each other following melt ejections. The elongation dispersive mixing process was performed at high pressure (1250 bar) and high flow rate (56 cm /s) by using an injection molding machine.

The fiber length was measured with by using a flow cell equipment in order to decide the influence of the different processing techniques. This method was used to obtain the fibre length distribution and the width distribution. These values were calculated according to TAPPI T271 (0-7.60 mm) and ISO 16065 (0.20-7.00 mm) standards.

The homogeneity of the samples obtained from the different the processing techniques was also studied. Soxhlet extraction was performed in order to determine the actual fiber content.

Sections of the obtained samples were collected in order to estimate the number and the size of the cellulosic fiber aggregates.

*Material used*

*Cellulosic fibers*

The cellulosic fibers used were obtained from softwood kraft pulp from Södra (Södra Green). The fibers had a density of about 1.5 g/cm$^3$.

The cellulosic fibers were delivered as fiber web sheet and cellulosic fibers had to be separated from each other in order to be fed into the agglomerator, the cellulose sheets were ground in a grinding machine with a rotor and a stator. Both rotor and stator had knives mounted and cut the cellulosic fibers when the rotor was rotating. Beneath the stator was a sieve that defined the particle size of the grinded material. The dimension of the holes in the sieve was 0.5 mm.

*EAA*

The EAA used was *Primacor® 3540* from Dow Chemical Company. The EAA had a 7 wt% acrylic acid content, melt flow rate (190°C/2.16 Kg, ISO 1133) of 8 g/10 min and density of 0.932 g/cm$^3$.The EAA was in the form of pellets.

*Agglomerates*

The agglomerates were obtained by using the Palltrusion™-process method.

The grinded cellulosic fibers and the EAA pellets were gravimetrically fed into the agglomerator, wherein the fibers and the EAA attached to each other due to the friction heat created by the screw rotation. The obtained EAA-cellulosic fiber material was squeezed through multiple die orifices at the perimeter of the die head and cut by rotating knives. Pellets are thus formed in the agglomerator machine. The moisture content of the agglomerates reported after the agglomeration process was less than 1 %.

The agglomerates obtained contained EAA and 30 or 70 wt% cellulosic fibers. The agglomerates containing 30 wt% cellulosic fibers are referred to as A30 and the agglomerates containing 70 wt% cellulosic fibers are referred to as masterbatch A70. The samples made from the A30 are called 30. Samples were also prepared by mixing the masterbatch A70 with additional EAA, in order to obtain a composition having about 30 wt% cellulosic fiber content. Masterbatch A70 and EAA were mixed by hand, both in solid form, this composition is called 30(70). However, the skilled person will recognize that other methods can be used for mixing said components in order to obtain the same composition.

*Processing techniques*

The different processing techniques used were:

a) injection molding, (IM)
b) extrusion mixing (EM)
c) elongation dispersive mixing (EDM)

a) injection molding

A30 was directly injection molded. The obtained sample is called 30 IM.

30(70) was directly injection-molded. The obtained sample is called 30(70) IM.

The injection molding was performed using Arburg ALLROUNDER, 221 M-250-55. The temperature profile used was 90, 130, 140, 150 and 150°C, the injection pressure was 1000 bar, cycle time 50 s and the mold was at room temperature.

b) extrusion mixing

A30 was passed through an extrusion machine (extrusion mixing of A30) wherein mixing took place. The maximum screw speed was 150 rpm (revolutions per minute). After the extrusion mixing the obtained mixture was molded. The obtained sample is called 30 EM.

30(70) was passed through an extrusion machine (extrusion mixing of 30(70) at different screw speeds: 50, 85, 100 and 150 rpm. After the extrusion mixing the obtained mixture was injection molded. The obtained samples are called 30(70) 50, 85, 100 and 150 rpm respectively. The additional EAA was added before the extruding process.

The extrusion mixing was performed with a Brabender® compact extruder, Brabender OHG, Duisburg, Germany. The extruder had a screw diameter D = 19 mm and a screw length of 25D, three individually controlled temperatures zones and a temperature-controlled circular die with a diameter 3 mm . The temperature profile along the barrel from hopper to die was 90, 130, 140, 140°C. The screw rotation speeds used were 50, 85,100 and 150 rpm (150 rpm was the maximum speed).

The injection molding was performed using Arburg ALLROUNDER, 221 M-250-55. The temperature profile used was 90, 130, 140, 150 and 150°C, the injection pressure was 1000 bar, cycle time 50 s and the mold was at room temperature.

c) Elongation dispersive mixing

Elongation dispersion mixing was performed to A30. After one elongation dispersive mixing, part of the obtained mixture was removed and injection molded and the obtained sample was called 30; 1 pass. The other part of the mixture was subjected to elongation dispersive mixing again at maximum pressure and then injection molded. The obtained sample was called sample 30; 2 passes.

Elongation dispersive mixing was performed to masterbatch A70. After one elongation dispersive mixing, part of the obtained mixture was removed and was subjected to one additional elongation dispersive mixing. The obtained samples from both mixing processes were hand-mixed with EAA pellets in order to obtain a cellulosic fiber content of 30 wt%. After this step, the obtained compositions were injection molded and the samples were called samples 30(70); 1 1 pass and 30(70);2 passes.

Elongation dispersive mixing was performed by using an injection molding machine, Arburg ALLROUNDER, 221 M-250-55, Austria. Elongation dispersive mixing of the batches A30 and A70 was performed at the maximum pressure and flow rate. The temperature profile from the hopper to the die was 90, 130, 140, 150, 150°C, the pressure was 1250 bar and the flow rate 56 $cm^3$/s. The screw diameter was 25 mm and the nozzle die diameter 2 mm.

The injection molding was performed using Arburg ALLROUNDER, 221 M-250-55. The temperature profile used was 90, 130, 140, 150 and 150°C, the injection pressure was 1000 bar, cycle time 50 s and the mold was at room temperature.

*Calculations*

The elongational strain ($\varepsilon$) and the elongational rate ($\varepsilon*$) were calculated by Eq. (1) and Eq. (2) respectively assuming constant volume flow. The obtained values were 5.05 for the elongational strain and 140 $s^{-1}$ for the elongational rate (Tadmor, Z.G., Gogos C.G.; "Principles of polymer processing", Wiley-Interscience, 1979)

$$\varepsilon = \ln\left(\frac{r_0^2}{r^2}\right) \qquad (1)$$

wherein $r_0$ is the radius of the cylinder and $r$ is the radius of the nozzle die.

$$\varepsilon* = \frac{v_1 - v_0}{L} \qquad (2)$$

wherein $v_0$ is the speed in the cylinder, $v_1$ is the speed at the nozzle and $L$ is the length comprising the nozzle length and the nozzle tip length.

*Testing*

*1. Tensile testing*

The tensile mechanical properties, i.e. tensile modulus, tensile strength and strain at fracture were measured according to ISO527-1 with a Zwick® 1455 tensile testing machine, Germany, equipped with free-standing clip-on extensometer with adjustable gauge length. A cross-head speed of 6 mm/min corresponding to a strain rate of about 1.4x10$^{-3}$ $s^{-1}$ was used and the gauge length of the extensometer was 60 mm. The measurements were performed at 23°C $\pm$ 0.5°C.

*2. Fiber length measurements*

The fiber length measurements were performed by using an optical analyzer Kajaani® FS300, Metso Automation, Finland. The method is based on light polarization measurements of the fibers in water. The samples were prepared accordingly: The polymer was extracted directly from the samples with xylene and then the cellulosic fibers were washed with water and kept in water before performing the measurements. With this method the fiber length distribution and the width distribution were obtained, calculated according to TAPPI T271 0-7.60 mm and ISO 16065 0.20-7.00 mm standards. The values given are the result of five measurements for the A30 agglomerates and sixteen for the A70.

*3. Fiber content*

The actual fiber content was measured for some of the samples. A small piece of each sample was cut and weighed before extracting (Soxhlet) the polymer with xylene during approximately 72h. After this time the thimble containing the cellulosic fibers was dried at room temperature, weighed and the fiber content determined.

*4. Microscopy image analysis*

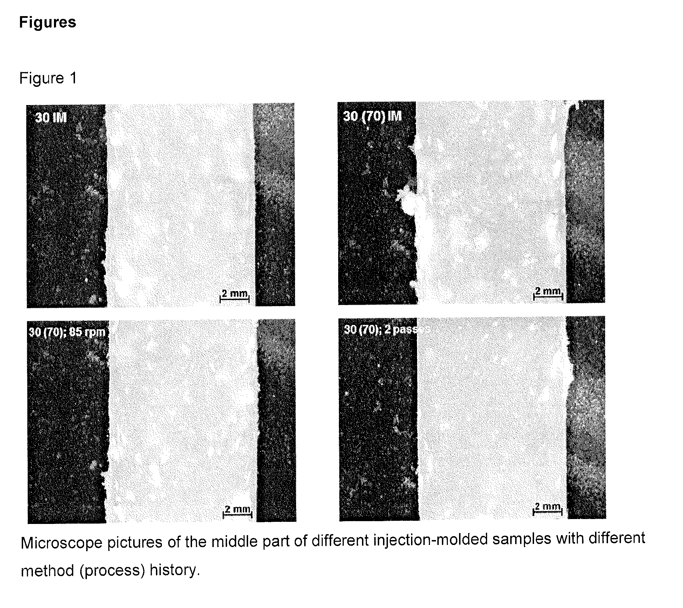

The middle part of the injection molded samples was milled from 4 mm to 1 mm thickness in order to determine the size and number of cellulose aggregates by microscopal analysis. The samples were analyzed with a stereomicroscope type SteREO discovery.V20 from Carl Zeiss, Germany. The microscopy pictures are shown in Fig.1. The total characterized area was 1 x 2 cm$^2$. From the obtained pictures, the fiber aggregates were measured by hand and counted.

*Results and discussion*

*a. Visual characterization*

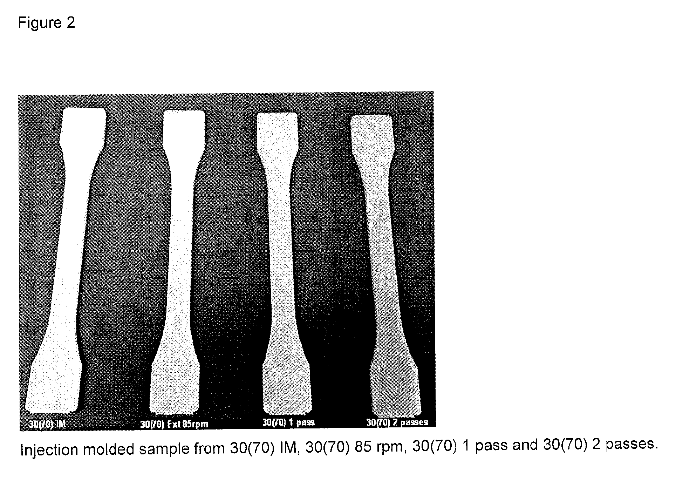

The injection molded samples made from the compositions containing masterbatch A70 and EAA, denoted 30 (70) (figure 2). Samples obtained by directly injection molding contained more fiber aggregates compared to those obtained by elongation dispersive mixing. The samples that had been obtained by using the elongation dispersive mixing process contained a considerably reduced amount of aggregates; this is especially true for the samples that had been elongation dispersive mixed twice.

*b. Microscopy image characterization*

This characterization method was used in order to verify that elongation dispersive mixing is a successful method to break-up the aggregates and disperse the cellulosic fibers (see figure 1). The amount of aggregates in the samples obtained by elongation dispersive mixing was considerably lower than the other obtained samples. This is especially true for the samples that had been elongation dispersive mixed twice.

*c. Fiber content*

The measured fiber content of some samples is shown in Table 1.
The fiber content of the as-received cellulose aggregates, reference A30 and masterbatch A70, was also measured; being for the reference A30 34 wt % and 67 wt % for the masterbatch A70. The injection molded reference A30 did not show any change in fiber content but when injection molding the masterbatch A70 with EAA, sample 30 (70) IM, the cellulose content slightly decreased to 28 wt %. After extrusion mixing, the cellulose content increased up to 36 wt %, which was the highest among all the measured samples. One pass of elongation dispersive mixing had no effect on the homogeneity of the fiber content, after two passes the content of cellulosic fibers measured in the obtained final composite was about 25 wt%, however considering the high standard deviation (4,5 % due to the mixing by hand) the cellulosic fiber content was about 30 wt%. In this last case the value is the result of four different fiber content measurements with a standard deviation of 4.5%. The possible reason for such differences in fiber content is the hand-mixing made before extrusion mixing but also in this particular case the feeding of the materials was more difficult due to the impossibility of pelletizing the material obtained from the second pass of elongation dispersive mixing. The material after the second pass broke very easily due to the degradation of the cellulosic fibers. However, this can be avoided by using a machine for mixing the pellets. Even though the samples obtained by elongation dispersive mixing had a slightly lower value of the measured cellulose content than the samples obtained by the other processing techniques, said samples exhibited the best mechanical properties of all, i.e. the best stiffness and tensile strength. This is an indication of how effective elongation dispersive mixing is in breaking up the fiber aggregates and thus dispersing and orienting the fibers. By breaking up the aggregates, the surface contact area of the fibers will increase so fibers are more effectively used as reinforcement with the consequent improvement of the mechanical properties.

*d. Fiber length*

The fiber length of the original cellulosic fibers before the formation of the agglomerates yielding the reference A30 and the masterbatch A70, was 2.45 mm with the standard deviation 0.15 mm based on three measurements. The diameter was also measured, being about 30 $\mu$m for all measured fibers. During the agglomeration process though, the fiber length was reduced to 0.55 mm for the reference A30 and to 0.48 mm the masterbatch A70. The reduced fiber lengths corresponded well to the grinding screen used during the agglomeration process. The standard deviations were 0.02 and 0.03 mm respectively. The fiber lengths shown in Table 1, indicate that the further melt processing have an insignificant effect on the fiber length since all the measurements were in the same range after the first melt mixing, i.e. the agglomeration process. However, if the small differences in fiber length between the samples are taken into account it could be observed that the sample 30(70); 2 passes had the shortest fibers but the best mechanical properties of all samples.

*e. Tensile properties*

The measured mechanical properties are summarized in Table 1. All the values are averages values and the standard deviation (in parenthesis) of seven measurements is included. The corresponding properties of the EAA, without any fiber, were also measured and given as reference values. In general, by adding cellulosic fibers to the EAA matrix, the tensile modulus (E) and the tensile strength ($\sigma$) increased and the elongation at break ($\varepsilon$) decreased. As can be seen from the table, the processing had a significant effect on the mechanical properties of the samples. As also can be seen from the table, the elongation dispersive mixing resulted in improved tensile mechanical properties for the samples.

Table 1

| Samples | | Measured fiber content (%) | E (MPa) | σ (MPa) | ε (%) | Fiber length (mm) |
|---|---|---|---|---|---|---|
| Direct injection molding | **EAA** | - | **118(18)** | **12.4 (0.1)** | **76 (2)** | - |
| | 30 IM | 30 | 630 (37) | 13.4 (0.3) | 10 (1) | 0.49 (0.00) |
| | 30 (70) IM | 28 | 652 (64) | 16.3 (0.7) | 10 (2) | 0.45 (0.01) |
| Extrusion mixing | 30; 150rpm | - | 588 (45) | 14.1 (1.0) | 10 (2) | - |
| | 30(70); 50 rpm | - | 694 (76) | 13.7 (0.1) | 12 (2) | 0.41 (0.01) |
| | 30(70); 85 rpm | 36 | 780 (64) | 15.2 (0.5) | 9 (1) | 0.44 (0.00) |
| | 30(70); 100 rpm | 31 | 585 (44) | 13.4 (0.2) | 11 (1) | 0.46 (0.00) |
| | 30(70); 150 rpm | - | 577 (21) | 13.0 (0.2) | 12 (1) | - |
| Elongation dispersive mixing | 30; 1 pass | - | 701 (25) | 14 (0.2) | 10 (1) | - |
| | 30; 2 passes | - | 750 (51) | 15 (0.3) | 8 (1) | - |
| | 30 (70); 1 pass | 31 | 639(111) | 15.6 (1.0) | 13 (3) | 0.43 (0.00) |
| | 30 (70); 2 passes | 25 | 785 (90) | 18.2 (0.7) | 12 (2) | 0.38 (0.04) |

*f Results*

The best results are obtained for samples having one or two elongation dispersive mixing before being processed by injection molding. This is because these samples contain considerably reduced amounts of aggregates and said aggregates are also very small. The elongation dispersive mixing will break-up the aggregates, thus dispersing them in the thermoplastic matrix and also orient the fibers and the thermoplastic matrix.

**References**

1. US 2003/0228454

2. J. Zhang et al. (J. Appl. Polymer Sci. 113, 2081-2089, (2009))

3. J. Morán et al. (J. Appl. Polymer Sci. 103, 228-237 (2007))

4. US 5709933

5. WO 99/56936

**Claims**

1. A fiber-reinforced composite comprising cellulosic fibers, a thermoplastic matrix and optionally additives, wherein said thermoplastic matrix essentially contains ethylene acrylic acid copolymer (EAA).

2. The composite according to claim 1, wherein said thermoplastic matrix only contains EAA.

3. The composite according to claim 1, wherein said composite consists of cellulosic fibers, a thermoplastic matrix essentially containing EAA and no or at least one additive.

4. The composite according to any one of claims 1 to 3, wherein said composite contains cellulosic fibers in the range of 10 to 40 weight% (wt%).

5. The composite according to any one of claims 1 to 4, wherein said range is of 20 to 40 wt% or said range is of 25 to 35 wt% or said range is of 28 to 30 wt%.

6. The composite according to any one of claims 1 to 5, wherein the length of the cellulosic fibers is in the range of 0.1 to 6 mm.

7. The composite according to any one of claims 1 to 6, wherein the ethylene acrylic acid copolymer comprises acrylic acid in the range of 3 to 20 weight% (wt%).

8. The composite according to any one of claims 1 to 7, wherein the ethylene acrylic acid copolymer comprises acrylic acid in the range of 3 to 10 weight%.

9. The composite according to any one of claims 1 to 8, wherein the ethylene acrylic acid copolymer comprises 7 wt% acrylic acid or 3 wt% acrylic acid.

10. A method for manufacturing a fiber-reinforced composite mixture comprising 10 to 40 wt% cellulosic fibers, a thermoplastic matrix and optionally additives **characterized in that** said method comprises the following steps:

   a. preparing a mixture comprising cellulosic fibers in the range of 10 to 70 weight%, optionally additives and a thermoplastic matrix;
   b. passing the mixture obtained in a) through a device that will provide an elongational flow of said mixture by using high pressure, said flow will break-up the cellulosic fiber aggregates and orientate the cellulosic fibers in the flow direction.

11. A method for manufacturing a fiber-reinforced composite comprising 10 to 40 wt% cellulosic fibers, a thermoplastic matrix and optionally additives **characterized in that** said method comprises the following steps:

   a. preparing a mixture comprising cellulosic fibers in the range of 10 to 70 weight%, optionally additives and a thermoplastic matrix;
   b. passing the mixture obtained in a) through a device that will provide an elongational flow of said mixture by using high pressure, said flow will break-up the cellulosic fiber aggregates and orientate the cellulosic fibers in the flow direction;
   c. using the mixture obtained in step b) in an injection molding machine or extruder whereby a fiber-reinforced composite is obtained.

12. The method according to any one of claims 10 to 11, wherein said method comprises an additional step b1), wherein b1) is repeating step b at least once.

13. The method according to any one of claims 10 to 12, wherein additional thermoplastic matrix is added to the mixture before or in step b).

14. The method according to any one of claims 11 to 13, wherein additional thermoplastic matrix is added to the mixture before or in step c).

15. The method according to any one of claims 10 to 14, wherein said thermoplastic matrix is selected from polyethylene, polypropylene or copolymers thereof.

16. The method according to any one of claims 10 to 14, wherein said thermoplastic matrix essentially contains polyethylene acrylic acid copolymer.

17. Use of the method according to any one of claims 11 to 14 and 16 for manufacturing a composite according to any one of claims 1 to 9.

18. Use of the method according to any one of claims 10 to 14 for obtaining a composite.

19. A cellulosic fiber-reinforced composite manufactured by the method according to any one of claims 11 to 14.

20. Use of a composite according to any one of claims 1 to 9 and 19 as interior panel construction, household appliances, automotive parts, boat hulls and packages.

**Figures**

Figure 1

Microscope pictures of the middle part of different injection-molded samples with different method (process) history.

Figure 2

Injection molded sample from 30(70) IM, 30(70) 85 rpm, 30(70) 1 pass and 30(70) 2 passes.

Figure 3

Strain-stress curves for the injection-molded 30(70) specimens with the studied different melt mixing histories.

Europäisches
Patentamt

European
Patent Office

Office européen
des brevets

# EUROPEAN SEARCH REPORT

Application Number

EP 11 16 2066

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 5 709 933 A (EVANS DANIEL W [US]) 20 January 1998 (1998-01-20) * claims 1-21; example 1 * ----- | 1-20 | INV. C08J5/00 |
| X | WO 2010/034946 A1 (CT NAT D ETUDES SPATIALES CNES [FR]; CASTERAS CHRISTOPHE [FR]) 1 April 2010 (2010-04-01) * claims 1-20; examples 1-6 * ----- | 1-20 | |
| X | US 2009/130443 A1 (LUSTIGER ARNOLD [US]) 21 May 2009 (2009-05-21) * claims 1-50; examples 1-4 * ----- | 1-20 | |
| X | EP 1 070 782 A1 (WWJ L L C [US]) 24 January 2001 (2001-01-24) * claims 1-16; examples 1-12 * ----- | 1-20 | |

TECHNICAL FIELDS
SEARCHED      (IPC)

C08J

The present search report has been drawn up for all claims

| Place of search | Date of completion of the search | Examiner |
|---|---|---|
| Munich | 20 June 2011 | Glomm, Bernhard |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 11 16 2066

This annex lists the patent family members relating to the patent documents cited in the above-mentioned European search report.
The members are as contained in the European Patent Office EDP file on
The European Patent Office is in no way liable for these particulars which are merely given for the purpose of information.

20-06-2011

| Patent document cited in search report | | Publication date | Patent family member(s) | | Publication date |
|---|---|---|---|---|---|
| US 5709933 | A | 20-01-1998 | US | 5585054 A | 17-12-1996 |
| WO 2010034946 | A1 | 01-04-2010 | FR | 2936551 A1 | 02-04-2010 |
| US 2009130443 | A1 | 21-05-2009 | NONE | | |
| EP 1070782 | A1 | 24-01-2001 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20030228454 A
- US 5709933 A
- WO 9956936 A
- US 5709933 B

### Non-patent literature cited in the description

- **BOTH J. ZHANG et al.** *J. Appl. Polymer Sci.,* 2009, vol. 113, 2081-2089
- **J. MORÁN et al.** *J. Appl. Polymer Sci.,* 2007, vol. 103, 228-237
- **TADMOR, Z.G. ; GOGOS C.G.** Principles of polymer processing. Wiley-Interscience, 1979
- **J. ZHANG et al.** *J. Appl. Polymer Sci.,* 2009, vol. 113, 2081-2089